# EUROPEAN PATENT APPLICATION

(11) **EP 2 124 509 A2**
(43) Date of publication of application: **25.11.2009**
(21) Application number: 09251253.2
(22) Date of filing: 02.05.2009
(51) Int. Cl.: H05B 41/28

(54) **Gas discharge lamp ballast with power factor correction**

(30) Priority: 03.05.2008 GB 0808130
(71) Applicant: Powell, David John, Hilton Derbyshire DE65 5GW (GB)
(72) Inventor: Powell, David John, Hilton Derbyshire DE65 5GW (GB)
(74) Representative: Parnham, Kevin

(57) **Abstract**

An electrical power supply arrangement for a lamp, the power source arrangement having means for presenting an alternating current to one side of a load (12) through a blocking capacitor (8), the arrangement having a storage capacitor (22) associated on the other side of the load trough a bypass capacitor (24) and a control diode (21) combination whereby a part of the alternating current peak is stored for combination with the alternating current presented to the load dependent upon a volume ratio between the bypass capacitor and the storage capacitor.

## Description

The present invention relates to an electrical power supply arrangement and more particularly but not exclusively to an electrical power supply arrangement utilised with lighting devices

To maximise power distribution efficiency the EC has introduced a Directive, known as EN61000, which limits the maximum harmonic levels for products connected to a consumer power source. There are four classifications under this Directive of which class C covers any lighting product. The Directive determines a limit for all harmonics of the fundamental supply frequency up to and including the 39^{th}. In general the method by which manufacturers have designed their products to be compliant to the Directive is the same. This is to use a set of electronic components arranged to actively convert the source AC supply into a steady DC voltage which is slightly higher than the peak voltage of the supply. In Europe the general power source is 230v RMS which means the peak is 1.414 x 230v = 325v so in general a DC value of 400v is used. There is what is known as passive means to improve harmonics but unfortunately these cannot achieve the required limits of the Directive. To achieve the requirement of the harmonic Directive the target device load must be applied such that it does not vary by more than prescribed limits averaged over any 16 periods of the input cycle. This effectively means that the load should present a current profile which follows the voltage cycle very closely. If a fluorescent lamp were to be exposed directly to this requirement it would need to function for the period when the supply cycle was below the level at which the fluorescent tube could maintain the plasma strike and the period when it was so high that the plasma would be over driven to the point of breakdown. That is why the standard method to remedy this is to place an active converter between the rectified input power source and the lamps voltage inverter. This process achieves the requirement of the Directive but has several disadvantages.

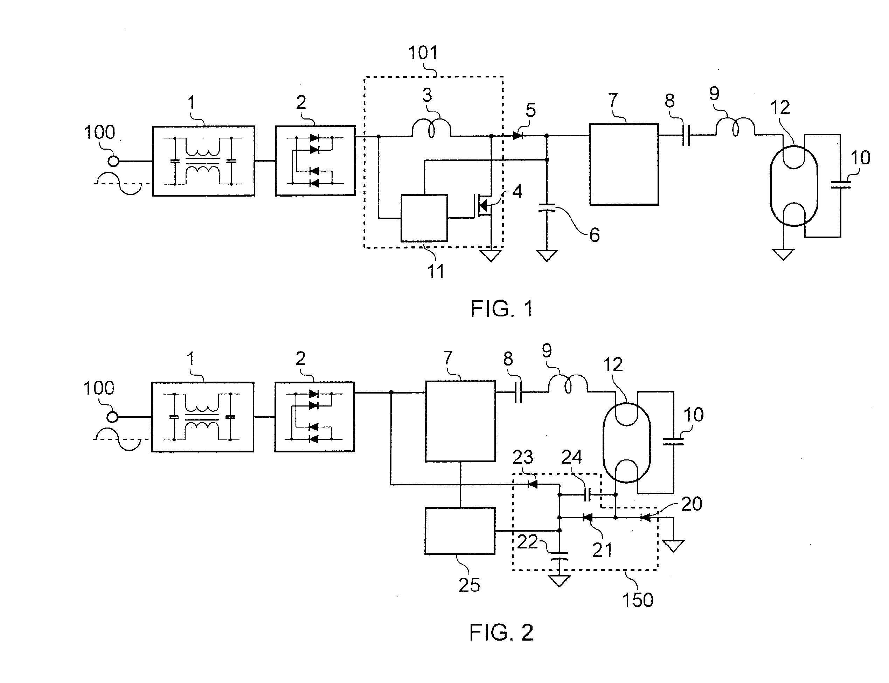

Particular problems with present arrangements with regard to processing of power supply to such devices as lighting products is that expensive and relatively bulky electronic components are required in order to provide the processing functions. Such expensive and bulky components cannot be used with small lamps, such as those utilised for domestic purposes and which use a screw thread or bayonet fitting bulb type lighting products which are designed to have a low energy consumption find it difficult to accept the expense because they are disposable and to accommodate the components within the available space. Figure 1 provides a circuit illustration of a traditional approach to harmonic control.

Referring to figure 1 showing a traditional method, firstly a power source 100 is filtered by means of a filter circuit 1 which blocks electromagnetic interference generated. It is then rectified by means of a basic bridge rectifier 2. The rectified voltage is then applied to one side of an inductor 3 who's other terminal is both connected to a power transistor 4 and a recovery diode 5. The other side of the recovery diode is connected to a large storage capacitor 6 across which is developed a steady DC voltage. The DC voltage is then used to supply an inverter circuit 7 which in turn connects via a DC blocking capacitor (8) to one side of an inductor (9). The other side of this inductor 9 is connected to a lamp 2 via its heater connections and passes through a capacitor 10. Inductor 9 and capacitor 10 form a resonator circuit which is able to increase the peak inverter output voltage swing to the level required to initially trigger the fluorescent lamp 12 into conduction. The inverter 7 is operated at a much higher frequency than the supply source 100 frequency is usually about 50KHz-70KHz. A power transistor 4 is driven by means of a controller/driver device 11 capable of switching the power transistor 4 on and off in such a way as to effectively map the current taken from the rectified input voltage into the bulk storage capacitor 6. The controller/driver 11 is able to average the current taken from the rectifier (2) such that the voltage across the storage capacitor 6 is maintained within a safe range. The frequency of the power switch controller is much higher than the supply source and generally has an average of about 150KHz. Optionally, there is sometimes added an inverter controller section which directly controls the inverter 7 with a purpose to improve the overall inverter stability and safety during lamp 12 start and when lamp 12 errors occur. Losses within the traditional method depicted in figure 1 occur due to the resistive and magnetic properties of the components required. The total lose is generally between 10-15% of the total load taken from the supply source.

In view of the above as indicated the traditional method and approach with respect of figure 1 incurs a significant cost and has a space requirement particularly with regard to the components depicted within broken line box 101. In such circumstances there is a limitation to acceptability of such traditional methods for power supply in relation to disposable low energy light bulbs etc.

In accordance with aspects of the present invention has provided method of providing electrical power to a load such as a lamp, the method comprising presenting an alternating current to one side of the load through a blocking capacitor and associating the other side of the load with a storage capacitor though a bypass capacitor and control diode whereby a part of the alternating current peak is stored for combination with the alternating current presented to the load dependent upon a value ratio between the bypass capacitor and the blocking capacitor.

Also in accordance with aspects of the present invention there is provided an electrical power supply arrangement for a lamp, the power source arrangement having means for presenting an alternating current to one side of a load through a blocking capacitor, the arrangement having a storage capacitor associated on the other side of the load trough a bypass capacitor and a control diode combination whereby a part of the alternating current peak is stored for combination with the alternating current presented to the load dependent upon a volume ratio between the bypass capacitor and the storage capacitor.

Generally the means for presenting the alternating current to one side of the load includes an inductor and an inverter.

Generally, the part of the alternating current peak stored for combination with the alternating current presented to the load is presented along a return path. Typically, the return path includes a series diode.

Generally, a limiting capacitor is provided across the load.

Generally, the alternating current is presented through a filter and a rectifier bridge. Possibly, the rectifier bridge is associated with a controller to determine the part of the alternating current peak stored by the storage capacitor and alter the configuration of the rectifier bridge and/or the inverter.

Generally, the alternating current presented to the one side of the load comprises a primary alternating current from a primary source and the part of the alternating current peak stored by the storage capacitor.

Typically, the part of the alternating current peak stored is fixed.
Alternatively, the part of the alternating current peak stored may be varied. Possibly variation is provided by altering the control diode and/or the bypass capacitor.

Generally, the arrangement includes a voltage inversion stage. Typically the voltage inversion stage is fixed. Alternatively, the voltage inversion stage is adjustable to dynamically vary the effective current presented energy to the load during a single or multi cycle period of power supply.

Typically, the voltage inversion stage is provided with monitor signals from various points in the power source arrangement such as with regard to the supply current, the supply phase, the load voltage and the load current. Typically, such monitoring signals are utilised in order to provide through a controller compensation for change in the configuration of the power source arrangement.

Possibly, the voltage inversion stage is provided with an output cycle mark or space period. The output cycle mark or space period can be fixed or altered dependent upon requirements.

Typically, the voltage inversion stage with regard to the output cycle is synchronised to the supply cycle in order to enable modification of the part of the alternating current peak stored by the storage capacitor.

An embodiment of the present invention will now be described by a reference to the accompanying drawings in which:-
Figure 2 providing a circuit illustrating of a power supply arrangement.
Figure 3 is a graphic illustration of typical current shapes for lamp loads compared to a harmonic supply cycle;
Figure 4 provides a graphic illustration of voltage across a traditional storage capacitor, voltage from a blocking capacitor, input supply currents and input supply voltages in a typical prior power supply arrangement;
Figure 5 provides a graphic illustration of output from a blocking capacitor showing a high frequency distortion;
Figure 6 provides a graphic illustration of voltage across a storage capacitor, output from an inverter, input supply current and input supply voltage in accordance with aspects of the present invention across two fully supply cycles;
Figure 7 is a graphic illustration of voltage and current conditions over a half supply cycle and therefore in greater detail in comparison with Figure 6;
Figure 8 is a magnified depiction similar to Figure 7 in order to illustrate ripple and in the voltage across the storage capacitor;
Figure 9 provides a graphic illustration of conditions in accordance with aspects of the present invention averaged over 512 supply half cycles.

In order to improve acceptability with regard to cost and for space requirements part of aspects of the present invention has as one objective creating a lower cost smaller sized and preferably less component count power supply arrangement for loads such as lighting devices.

In accordance with aspects the present invention power factor correction (PFC) is performed using a different approach. Instead of thinking of the load as fixed it is viewed as dynamic. A simple overview of aspects of the present invention is that it takes the high supply voltage cycle periods, when there is an excess of available energy, and temporally stores this excess which it uses while the cycle is below that which is sufficient to maintain the fluorescent lamp drive. The process is very subtle as the harmonic requirement dictates that the load must in essence follow the mains cycle. Aspects of the invention achieve this subtlety in two ways. Firstly, the basic component hardware design itself yields the majority of the requirement by its intrinsic design and in general can deliver sufficient harmonic correction to pass the regulatory Directive. A second part takes this roughly corrected load profile and applies final adjustments, by means of small variations in the lamp drive itself, to improve the correction even further. There are several important advantages to the invention over the traditional approach outlined in figure 1. Firstly the cost is minimal as only a couple of low value components are used compared to the many more expensive components required in the traditional method. Secondly the invention wastes no energy converting the input power into inverter power. The traditional method consumes between 10-15% of the total energy during its conversion. Thirdly the arrangement occupies a tiny fraction of the physical space of the traditional method so it can be employed in size limited products such as compact lamps. But most important of all is that aspects the invention enables for the first time the opportunity for low cost low energy lighting products to operate within the needs of the power generating companies and so it is no longer necessary have to be exempted from international harmonic regulations such as EN61 000.

Referring to figure 2, for comparison the elements which are consistent with figure 1 have the same reference numbers with all new components numbered from 20 onward. Starting from the input power source 100, this is filtered by means of the filter circuit 1 which blocks electromagnetic interference generated. It is then rectified by means of a basic bridge rectifier 2. Aspects of the invention differ from that of a traditional method (figure 1) as the rectified voltage is applied directly to the inverter circuit 7 which in turn connects via a DC blocking capacitor 8 to one side of an inductor 9. The other side of the inductor 9 is connected to the lamp 12 via its heater connections and passes through a capacitor 10. Inductor 9and capacitor 10 forms a resonator circuit which is able to increase the peak inverter output voltage swing to the level required to initially trigger the fluorescent lamp into conduction. In other aspects the arrangement as depicted in figure 2 differs from the traditional method (figure 1). The total lamp power is not simply taken back to the power ground but is instead passed through a pair of high speed diodes 20, 21. One of the diodes 20 directs the inverter cycle negative period to power ground. The other diode 21 in a diode and directs the inverter cycle positive period to the power ground via a storage capacitor 22. The capacitor 22 also has a diode (23) which is effectively in series with diode 21. The cathode of diode 23 connects directly back to the output of the rectifier 2 which is itself connected directly to the inverter 7. The positive control diode 21 is also decoupled by a capacitor 24. The capacitor 24 creates an effective divider impedance path which allows the diode 21 to be bypassed. The divider is a function of the value of the DC blocking capacitor 8 and the bypass capacitor (24).

For example, the simple arrangement of aspects of the present invention achieves a required harmonic correction is as follows. As the input supply voltage cycle rises from zero, the inverter (7) delivers the increasing voltage to the lamp resonator formed by the inductor (9) and the capacitor (10) into the fluorescent lamp (12). The negative period of each inverter current cycle is allowed to be fully driven into the lamp 12 due to the conduction of diode (20) which returns the negative current directly back to the power ground. The positive inverter cycle current passes through control diode (21) and then through the storage capacitor (22) to ground which retains some of the energy increasing the voltage across it. As the input voltage to the inverter (7) reaches its maximum the charge across the storage capacitor (22) reaches its maximum and is effectively limiting the maximum energy available to the lamp (12) as control diode (21) is reverse biasing the positive return path for the lamp current. During this ramp phase the DC blocking capacitor 8 is averaging the difference between the power of each positive and negative inverter (7) cycle. This means that the peak energy delivered to the lamp (12) can be limited to a safe value. The total energy retained by the storage capacitor (22) needs to be controlled. This is done via the diode bypass capacitor (24) working as a divider with the DC blocking capacitor (8). As the supply voltage cycle decreases from its peak the total energy in each positive cycle of the inverter (7) also decays. Now the DC blocking capacitor (8) which has been charged during the first 90 degrees of the input supply cycle now acts as a charge pump returning part of this energy on each negative period of the inverter cycle via diode (20). The positive period of the inverter cycle now sees the bypass capacitor (24) as its path to power ground as the diode 21 is reverse biased due to the retained charge on the storage capacitor (22). So no further charging can take place but a current path is maintained for the positive current periods of the inverter 7. As the supply source voltage reduces further the output from the rectifier (2) eventually is lower than the voltage across the storage capacitor (22) which causes the series diode (23) to conduct and the energy stored in the capacitor is now available to the inverter (7). The inverter (7) now effectively and temporarily sources all of its energy from storage capacitor (22). The capacitor (22) is of sufficient size to maintain the voltage ripple across itself to a value which allows the inverter 7 to be sustained during the low voltage periods of the supply source cycle. As the inverter 7 is sourced from the storage capacitor (22) during these periods it does not return any of the inverter positive cycle current back to itself as it is operating in exactly the same way as it did during the reducing supply voltage, 90-180 degrees, so the positive control diode (21) is always reverse biased and the bypass capacitor (24) is the effective path to power ground.
The overall effect of the invention is to steal the excess energy available during the peak input voltage cycle and use it during a low period. The storage capacitor (22) achieves this by making the maximum charge across it to be approximately 25% of the peak input voltage. The effect of the rising voltage energy retention and falling voltage steady energy loading delivers an almost perfect harmonic profile. The period when the inverter takes its energy source from the storage capacitor (22) is when the harmonic energy available from the supply cycle is minimal. So the invention keeps the total harmonic error very low and in the main it is focused within the 3^{rd} harmonic which in accordance with the EN61000 directive is allowed to be up to 30% of the total load current.

A further feature of aspects of the invention is that there is no input bulk storage capacitor as in the traditional method (figure 1), or even in the case of none harmonically corrected products. Aspects of the invention use a much smaller storage capacitor (22) which is after the inverter 7 and hence does not suffer from an immediate or rush charging current when power is first applied. It is this very large charging current that has a significant ageing effect on current lighting products not using aspects of the invention. There being no such rush charging current within the arrangement method of aspects of the present invention there can be no ageing effect whatsoever. Another important aspect of the invention is a far greater efficiency compared to the traditional method (figure 1). This is due to there being no intermediate conversion stage, as in the traditional method, which must first convert the output of the rectifier (2) into a steady DC voltage. Without the conversion stage aspects of the present invention does not waste any energy and therefore create any unnecessary heat to deliver the requirements of the EN61000 harmonics directive. This makes the invention as much as 15% more efficient than the traditional method. Also due to the invention having fewer components and these being of small size it is far less expensive to manufacture and wastes less raw resources.
There is a further optional feature provided by a controller (25) to the invention. It is required that all lighting products conform to electromagnetic limitations which are mainly performed by the addition of the input filter stage (1). Unfortunately this stage 1 introduces a capacitive reactive input for the supply current which will effectively cause a slight leading phase shift in the harmonic profile. This shift may not be significant enough to fail compliance to the harmonic directive but can still be undesirable. Also all post rectifier (2) stages, in lighting products, require a small capacitor fitted across the output of the rectifier (2) to help suppress more of the potential electromagnetic interference that is normal within the inverter (7) stage. This further adds to the capacitive phase shift on the input supply current. The invention is also capable of correcting these effects by adding the optional controller (25) to the inverter 7 itself. The controller (25) is supplied with input voltage and lamp (12) power monitoring signals and adjusts the inverter (7) in a lagging phase direction to null the leading phase effects of the electromagnetic correction stages. The controller (25) can also be "tuned" over the input supply voltage cycle to even further reduce the total harmonic content of a product, beyond the EN61000 limits, using the invention if so required. With this optional controller stage (25) it is also possible to actively adjust the inverter stage (7) such that the total energy consumed is constant over normal variations of the supply voltage source and to enable the lamp output to be held constant during any supply variations.

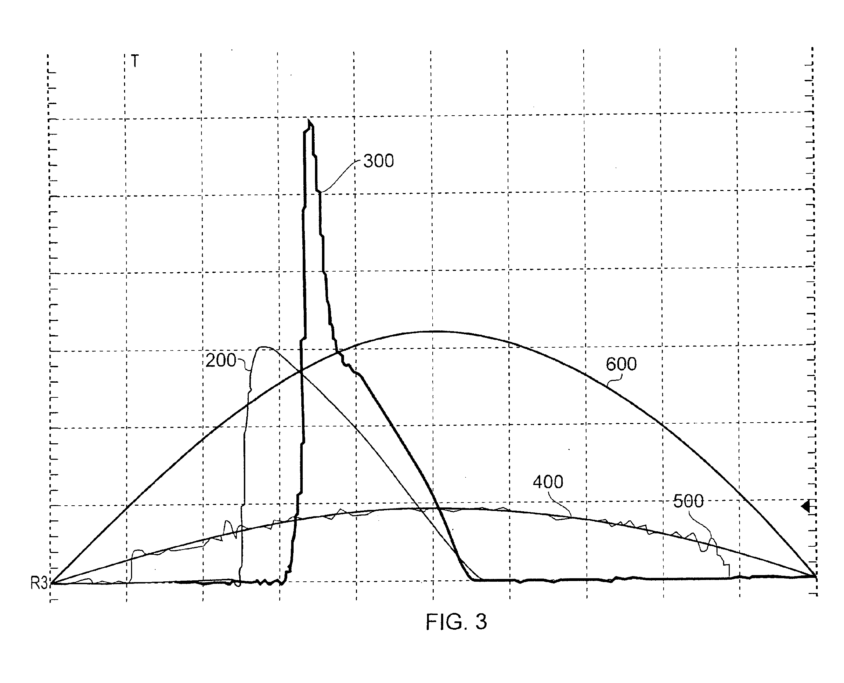

As indicated above in order to maximise power distribution efficiency rules are provided with respect to imitations of harmonics of the fundamental supply frequency. Figure 3 provides a graphic illustration of current variation over a half supply cycle for a number of lamp types. It will be noted that these lamp types depicted by lines 200, 300, 400 have no PFC correction. The lamps depicted are exempt from the harmonic directive which only applies to lamp devices with a power greater than 25 watts. Such exemptions were required previously in view of the cost of the necessary components for PFC connection and the limited accommodation space in screw in or bayonet fitted bulbs. It will be noted that there is a wide disparity from a harmonic supply cycle 600 meaning that there are power losses and therefore distribution inefficiencies. Aspects of the present invention relate to providing not only a PFC correction function, but also greater consistency with desired AC electrical power form as defined by the line 600 showing a harmonic supply cycle.

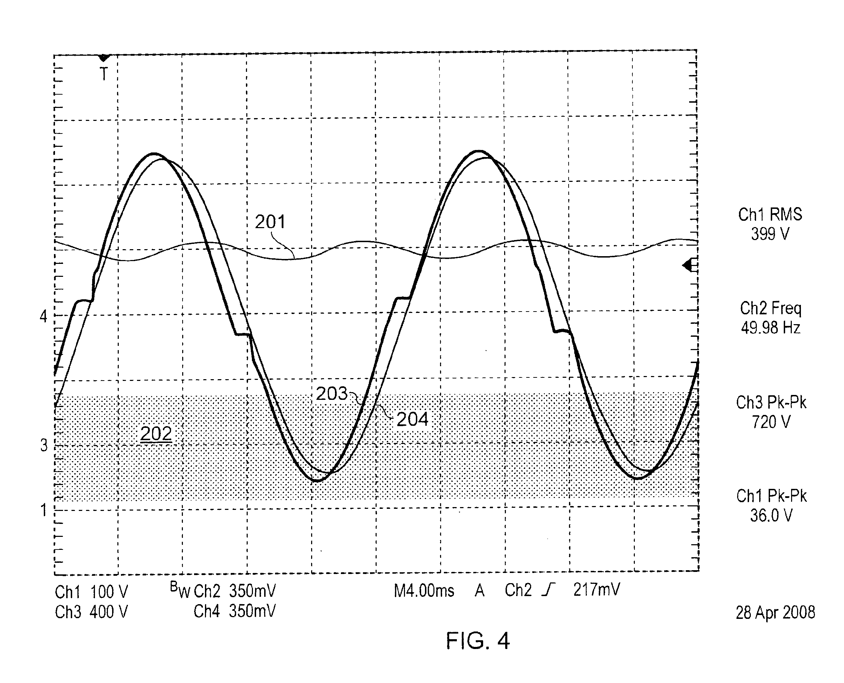

Figure 4 illustrates with regard to line 201 voltage across a traditional storage capacitor 6 as depicted in figure 1 above, output from a blocking capacitor 8 again as depicted in figure 1 gives plots 203, 204 in relation to respectively input current supply and input voltage supply to a traditional prior arrangement as depicted in figure 1. It will be noted that generally the current and voltage input supply traces or plots 203, 204 substantially follow each other with a slight delay whilst the voltage across a traditional storage device depicted by lines 201 undulates and the output from the blocking capacitor 8 depicted by a band 202 oscillates with high frequency. The output voltage from the traditional storage capacitor 6 is typical wavering at about 400V in order to ensure the load in the form of a lamp operates consistently.

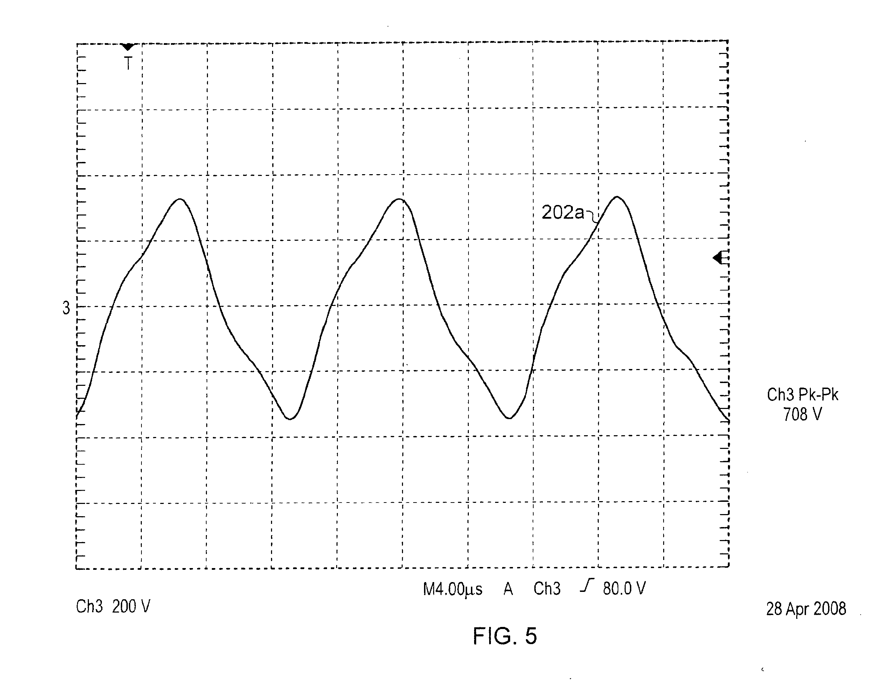

Figure 5 provides higher resolution with regard to the output of the blocking capacitor 8 depicted in Fig. 4 as band 202 and a trace line 202A in figure 5. As can be seen this output 202A has a frequency in the order of 72Kh and is distorted. This distortion is as a result of power losses and power distribution inefficiencies.

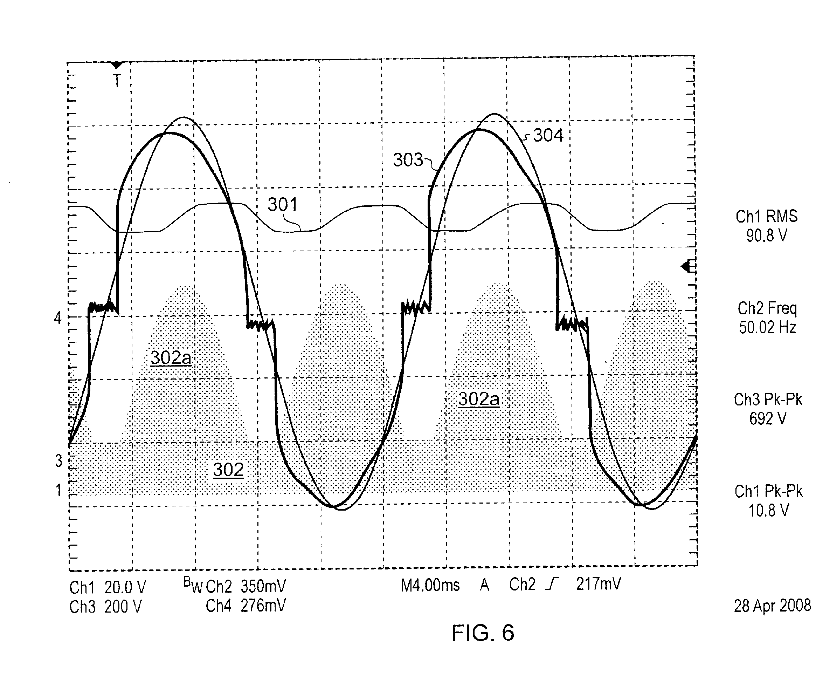

Figure 6 provides a graphic illustration with regard to similar measured voltage and current conditions. Thus, line 301 depicts voltage across the storage capacitor 22 as illustrated in figure 2, and 302 depicts output from the inverter 7 depicted in figure 2 whilst lines 303, 304 respectively show input supply current and input supply voltage for the arrangement depicted in figure 2.

In such circumstances it will be noted that the input supply current and input supply voltage 303, 304 substantially follow each whilst voltage across this storage capacitor 22 again is generally displaced to in the order of 400V with slight oscillation across the cycles. The output from the inverter 7 illustrates variations in peaks 302 sequence of peak 302A in inverter 7 output results from the storage capacitor 22 contribution and so conserves electric power and avoids problems with respective harmonics.

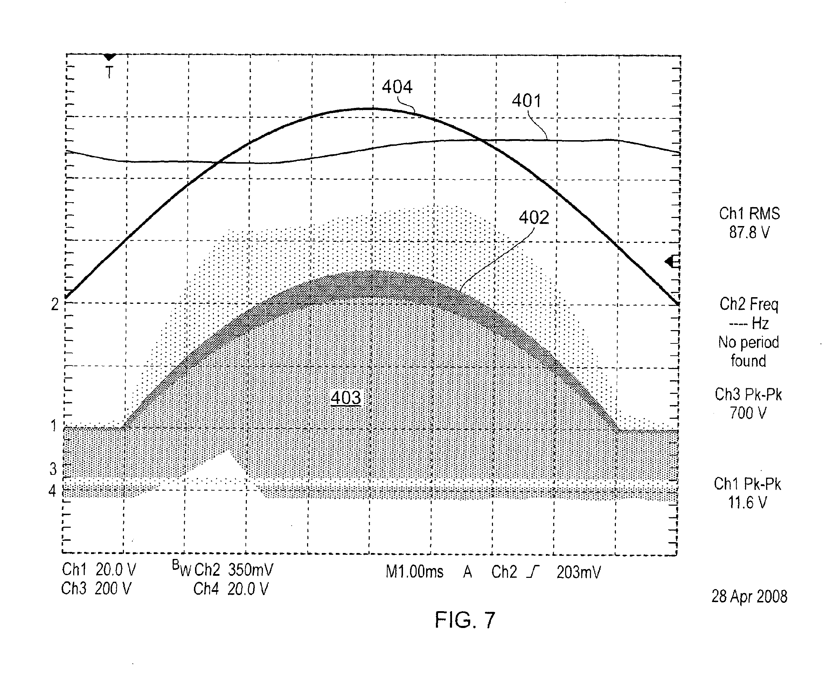

Figure 7 illustrates in greater detail the voltage across the capacitor 22 during a harmonic supply cycle through line 401 whilst line 402 illustrates the output from the inverter 7 depicted in figure 2. Line 403 illustrates voltage current signal levels at a junction of the diode 20 and the control diode 21 depicted in figure 2. Whilst line 404 again illustrates part of a supply voltage cycle. In such circumstances it will be noted that the voltage is essentially clipped in a peak area 403A due to power storage in the storage capacitor22 as depicted in Figure 2. This clipped voltage as indicated is as a result of power charging of the storage capacitor 22 and is determined by the relationship presented by the bypass combination of the bypass capacitor 24 and diode 21 to the storage capacitor 22 and more particularly a value ratio between the bypass capacitor 24 and the block capacitor 6.

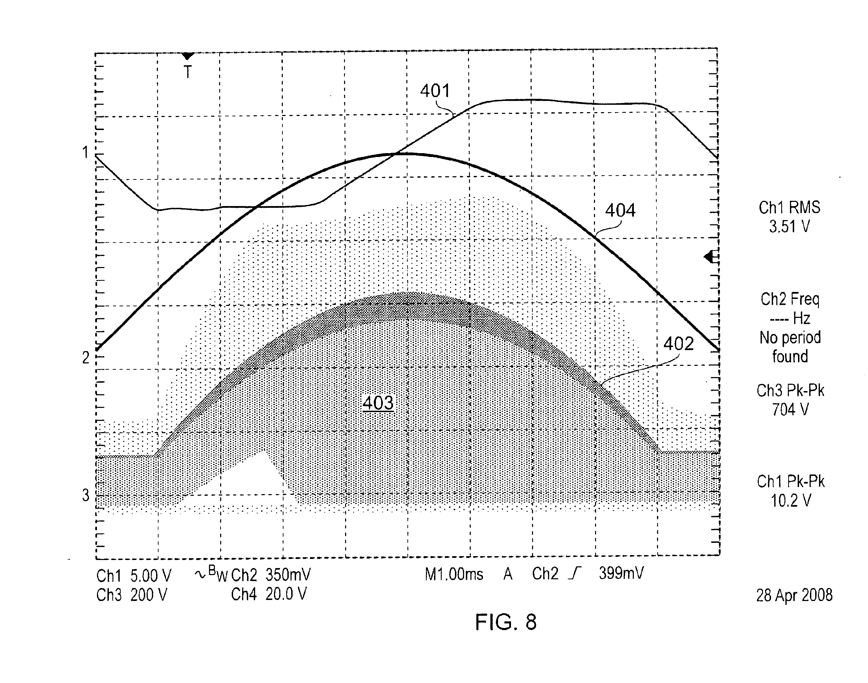

Figure 8 provides a magnified view of the graphic depiction provided in figure 7. Similar reference numbers have been utilised for comparison. In particular, the voltage of the storage capacitor22 as depicted by line 401 in figure 8 provides greater evidence with regard to ripple indicating clipping of the signal levels at the 403 peak indicative of storage in the storage capacitor 22.

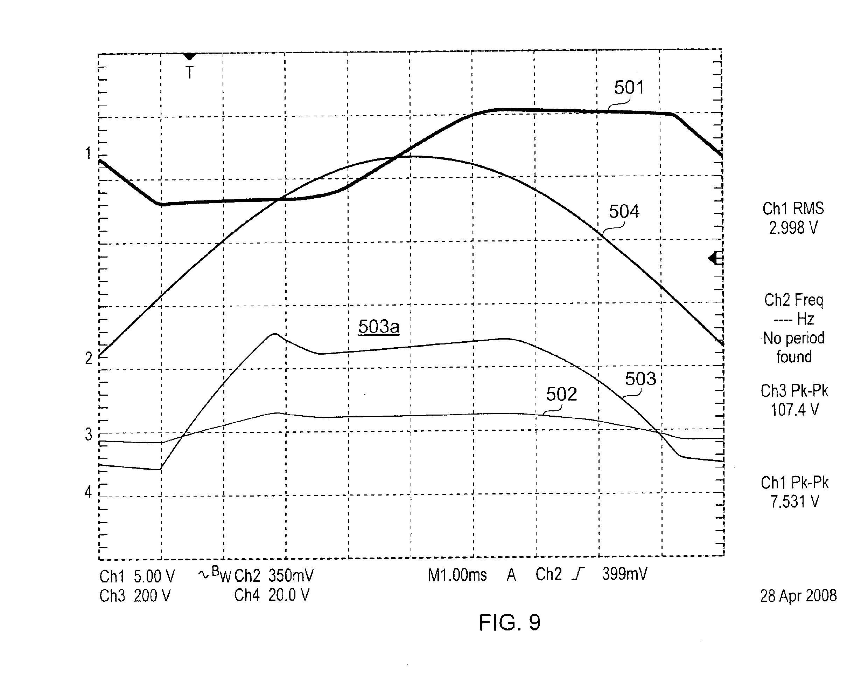

Figure 9 provides an illustration of voltage 501 across the storage capacitor 22 averaged over 512 supply half cycles. The output from the blocking capacitor 8 is depicted by line 402 averaged over 512 supply half cycles, the current or voltage signal or level 503 in at the junction between the diodes 20, 21 and again is averaged over 512 supply half cycles and 504 illustrates the input supply voltage. In such circumstances as can again be seen there is a limitation depicted by a plateau 503A which is indicative of storage by the storage capacitor 22. In accordance with aspects of the present invention the stored energy and other parts of the cycle will be presented through the inverter 7 in order to provide regenerative energy use and therefore greater efficiency.

In the above circumstances the relatively expensive elements depicted in box 101 in figure 1 can be removed for PFC filtering in accordance with aspects of the present invention. These components are not only expensive but also bulky. Thus, disposable low energy light bulbs would be more acceptable whilst providing efficient operation by PFC filtering in accordance with aspects of the present invention. The components illustrated in box 150 will be of small size and have a fraction of the cost of the components as depicted in box 101 of figure 1.

It will be understood that the bypass capacitor 24 essentially determines the level of storage provided by the storage capacitor 22 for return to the alternating current supply through the inverter 7. There is a relationship between the bypass capacitor 24 and the block capacitor 8 which will give significant controlled charging of the storage capacitor 22 in the supply current or voltage peaks.

In such circumstances in accordance with the present invention dependent upon operation requirements a value ratio between the bypass capacitor 24 and the blocking capacitor 8 will be determined for a desired necessary performance.

Typically, the bypass capacitor may have a value in the order of 68 nanofarad whilst the storage capacitor may have a value in the order of 10 microfarad. Modifications and alternations will be appreciated by persons skilled in the technology. Thus, the storage capacitor and block capacitor as well as the by-pass capacitor may all have variable geometries or an arrangement of such capacitors of different volume may be effectively switched into a series connection to other operational performance. Although principally described with reference to fluorescent lamp as the load. It will be appreciated that other loads may be associated with a particular supply arrangement in accordance with aspects of the present invention.

## Claims

1. A method of providing electrical power to a load such as a lamp, the method comprising presenting an alternating current to one side of the load through a blocking capacitor and associating the other side of the load with a storage capacitor though a bypass capacitor and control diode whereby a part of the alternating current peak is stored for combination with the alternating current presented to the load dependent upon a value ratio between the bypass capacitor and the blocking capacitor.

2. A method as claimed in claim 1 wherein the part of the alternating current peak stored for combination with the alternating current presented to the load is presented along a return path.

3. A method as claimed in claim 1 or claim 2 wherein the alternating current presented to the one side of the load comprises a primary alternating current from a primary source and the part of the alternating current peak stored by the storage capacitor.

4. A method as claimed in any of claims 1 to 3 wherein the part of the alternating current peak stored is fixed or varied.

5. A method as claimed in any preceding claim wherein the method includes a voltage inversion stage.

6. A method as claimed in claim 5 wherein the voltage inversion stage is fixed.

7. A method as claimed in claim 5 wherein the voltage inversion stage is adjustable to dynamically vary the effective current presented energy to the load during a single or multi cycle period of power supply.

8. A method as claimed in any of claims 5 to 7 wherein the voltage inversion stage is provided with monitor signals from various points in the power source arrangement such as with regard to the supply current, the supply phase, the load voltage and the load current.

9. A method as claimed in claim 8 wherein such monitoring signals are utilised in order to provide through a controller compensation for change in the configuration of the power source arrangement.

10. A method as claimed in claim 5 and any claim dependent thereon wherein the voltage inversion stage is provided with an output cycle mark or space period.

11. A method as claimed in claim 10 wherein the output cycle mark or space period can be fixed or altered dependent upon requirements.

12. A method as claimed in claim 5 and any claim dependent thereon wherein the voltage inversion stage with regard to the output cycle is synchronised to the supply cycle in order to enable modification of the part of the alternating current peak stored by the storage capacitor.

13. An electrical power supply arrangement for a lamp, the power source arrangement having means for presenting an alternating current to one side of a load through a blocking capacitor, the arrangement having a storage capacitor associated on the other side of the load trough a bypass capacitor and a control diode combination whereby a part of the alternating current peak is stored for combination with the alternating current presented to the load dependent upon a volume ratio between the bypass capacitor and the storage capacitor.

14. An arrangement as claimed in claim 13 wherein the means for presenting the alternating current to one side of the load includes an inductor and an inverter, and a limiting capacitor is provided across the load.

15. An arrangement as claimed claim 13 or claim 14 wherein the alternating current is presented through a filter and a rectifier bridge associated with a controller to determine the part of the alternating current peak stored by the storage capacitor and alter the configuration of the rectifier bridge and/or the inverter.
